# EUROPÄISCHE PATENTSCHRIFT

(11) **EP 0 833 092 B1**
(45) Veröffentlichungstag und Bekanntmachung des Hinweises auf die Patenterteilung: **06.06.2001**
(21) Anmeldenummer: 97116528.7
(22) Anmeldetag: 23.09.1997
(51) Int. Cl.: F16L 33/22, B25B 21/00

(54) **Schlauchverbindung und Verfahren zur Montage der Schlauchverbindung**
Hose connection and method of assembling said connection
Raccord pour tuyaux flexibles et méthode pour assembler ledit raccord

(30) Priorität: 27.09.1996 DE 19639778
(43) Veröffentlichungstag der Anmeldung: 01.04.1998
(73) Patentinhaber: Ashauer, Ernst, Dipl.-Ing., D-69469 Weinheim (DE)
(72) Erfinder: Ashauer, Ernst, Dipl.-Ing., D-69469 Weinheim (DE)
(74) Vertreter: Lins, Edgar, Dipl.-Phys. Dr.jur.

(56) Entgegenhaltungen:
- EP-A- 0 692 664
- FR-A- 1 157 177
- GB-A- 1 185 220
- GB-A- 2 133 850
- US-A- 2 319 024
- US-A- 2 863 347
- US-A- 4 951 976

## Beschreibung

Die Erfindung betrifft eine Schlauchverbindung bestehend aus einem Anschlussstutzen zum Aufschieben eines Schlauches unter Aufweitung des Schlauchinnendurchmessers und einem Schraubstück, das ein Innengewinde aufweist, das zumindest abschnittsweise einen Durchmesser aufweist, der kleiner ist als der Außendurchmesser des auf den Schlauchstutzen geschobenen Schlauchendes, sodass das Innengewinde unmittelbar unter Ausübung eines radial nach innen gerichteten Drucks auf das Schlauchende aufschraubbar ist, wobei das Schraubstück an seinem dem Schlauchende abgewandten Ende ein mit einem Innengewinde versehenes Gegenstück für ein mit einem entsprechenden Außengewinde versehenes Führungsstück des Anschlussstutzens aufweist. Die Erfindung betrifft ferner ein Verfahren zur Montage einer derartigen Schlauchverbindung.

Es ist üblich, Schläuche an Wasserhähne und andere Armaturen dadurch anzuschließen, dass das jeweilige Schlauchende auf einen Anschlussstutzen geschoben wird. Dabei wird das Schlauchende aufgeweitet. Elastische Rückstellkräfte erhöhen die Haftreibung des Schlauchendes an dem Anschlussstutzen, so dass dem axialen Abziehen des Schlauchendes von dem Anschlussstutzen ein erheblicher Widerstand entgegengesetzt wird. Dieser Widerstand reicht allerdings im allgemeinen nicht aus, das unbeabsichtigte Lösen des Schlauchendes von dem Anschlussstutzen sicher zu vermeiden. Wird in dem Schlauch im Betrieb ein gewisser Druck aufgebaut, führt dieser zu einer Dehnung des Schlauches, die das Gleiten des Schlauchendes von dem Anschlussstutzen erleichtert. Es ist daher bekannt, das Schlauchende auf dem Anschlussstutzen beispielsweise mit einer Schlauchschelle zu befestigen, deren Durchmesser mittels einer Schraube verkleinert werden kann. Die Verwendung von Schlauchschellen erfordert in jedem Fall die Benutzung eines Schraubenziehers und ist daher umständlich zu handhaben. Darüber hinaus weisen Schlauchschellen notwendigerweise über- und abstehende Blechenden auf, die eine gewisse Verletzungsgefahr beinhalten.

Es ist daher bekannt, die auf einen Anschlussstutzen geschobenen Schlauchenden mit Hilfe von Schraubstücken zu sichern, die auf das Schlauchende aufgeschoben werden, bevor dieses über das zugehörige Anschlussstück geschoben wird. Wie beispielsweise das DE 85 30 062 U1 zeigt, ist das Schlauchstück dabei mit einem zylindrischen Innengewinde versehen, dessen Innendurchmesser größer ist als der Außendurchmesser des auf dem Anschlussstutzen aufgeweiteten Schlauchendes. Der Anschlussstutzen ist mit Abstand von seinem freien Ende zunächst mit einem Ringsteg und dann mit einem Außengewinde versehen, auf das das Innengewinde des Schraubstücks aufschraubbar ist. Das Schraubstück ist mit einer stufenförmigen Innendurchmesserverringerung ausgebildet, wobei der verringerte Innendurchmesser etwa dem Außendurchmesser des nicht aufgeweiteten Schlauches entspricht. Beim Aufschrauben des Schraubstücks auf das Außengewinde des Anschlussstutzens wird der Schlauch zwischen der stufenförmigen Durchmesserverringerung und dem Ringsteg des Anschlussstutzens eingepreßt, wodurch das Aufblähen des Schlauches unter einem Innendruck an dieser Stelle verhindert und das zufällige Ablösen des Schlauches von dem Anschlussstutzen verhindert wird. Das Aufschrauben des Schraubstückes auf das Außengewinde des Anschlussstutzens kann im allgemeinen ohne Werkzeuge erfolgen. Ferner besteht keine Verletzungsgefahr. Nachteilig an dieser bekannten Lösung ist allerdings, dass der Anschlussstutzen in besonderer Weise geformt sein muss, um eine sichere Befestigung im Zusammenwirken mit dem Schraubstück zu realisieren.

Eine Schlauchverbindung der eingangs erwähnten Art ist durch GB 1 185 220 bekannt. Das Schraubstück ist dabei so ausgebildet, dass es auf den Schlauch aufgeschraubt werden muss, bevor der Schlauch auf den Schlauchstutzen geschoben wird. Das Aufschieben der gesamten Anordnung erfolgt durch das Zusammenspiel des vorlaufenden Gewindes des Schraubstückes mit dem Gewinde auf dem Führungsstück im Anschluss an den Schlauchstutzen. Eine derartige Anordnung ist in der Praxis nicht handhabbar, da das Aufschieben des Schlauchendes auf den Stutzen, nachdem das Schraubstück auf das Schlauchende aufgeschraubt worden ist, aufgrund der erforderlichen Axialverschiebung des bereits durch das aufgeschraubte Schraubstück komprimierten Schlauchendes eine sehr hohe Betätigungskraft erfordert, die darüber hinaus das Führungsgewinde extrem belastet. Um beim Einschrauben des Anschlussstutzens die Verbindung zwischen dem freien Schlauchende und dem Schraubstück nicht wieder zu lockern, muss das Gewinde, mit dem das Schraubstück auf den Schlauch geschraubt wird, gegenüber dem Führungsgewinde des Schraubstücks einen entgegen gerichteten Drehsinn aufweisen.

Eine ähnliche Verbindung ist durch FR-A-1 157 177 bekannt, bei der ein weiches Rohr ebenfalls zunächst in das Innengewinde einer Schraubhülse eingebracht wird und anschließend ein Schraubstutzen in das weiche Rohr eingeführt wird, indem ein Außengewinde des Stutzens mit einem Innengewinde der Hülse zusammenwirkt. In der Endstellung des Anschlussstutzens ist das Außengewinde des Anschlussstutzens durch das Innengewinde der Hülse hindurch geschraubt und hat keine Verbindung mehr mit dem vorher führenden Innengewinde der Hülse. Auch hier wird eine hohe Betätigungskraft benötigt und das Führungsgewinde extrem belastet, insbesondere die letzten Windungen, bevor die Führungsgewinde von Hülse und Anschlussstutzen ihren Kontakt verlieren. Auch hier müssen das Führungsgewinde und das mit dem weichen Rohr zusammenwirkende Gewinde gegensinnig sein, um ein Lockern der Verbindung zwischen Rohr und Hülse beim Einschrauben des Anschlussstutzens zu vermeiden.

Die vorliegende Erfindung geht somit von der Problemstellung aus, eine Schlauchverbindung der eingangs erwähnten Art zur Verfügung zu stellen, die gegen das zufällige Ablösen des Schlauchendes vom Anschlussstutzen gesichert ist, keine speziell geformten Anschlussstutzen benötigt und praktikabel handhabbar ist.

Ausgehend von dieser Problemstellung ist erfindungsgemäß eine Schlauchverbindung der eingangs erwähnten Art dadurch gekennzeichnet, dass zunächst das Schlauchende auf den Anschlussstutzen aufschiebbar ist und dass anschließend das Schraubstück von der Seite des Anschlussstutzens aus durch die Schraubverbindung zwischen Führungsstück und Gegenstück geführt auf das auf den Anschlussstutzen geschobene Schlauchstück aufschraubbar ist.

Das erfindungsgemäße Schlauchstück wird somit unmittelbar auf den Schlauch selbst aufgeschraubt, indem sich das Innengewinde unmittelbar in das Material des auf den Anschlussstutzen geschobenen Schlauchendes eindrückt und das Schlauchende in verkrallter Form hält. Das Schraubstück übt dabei einen radial nach innen gerichteten Druck aus und verhindert insbesondere das Aufweiten des Schlauchendes im Falle eines Innendrucks in dem Schlauch, so dass ein dadurch verursachtes Abgleiten des Schlauchendes von dem Anschlussstutzen verhindert wird. Das Schraubstück wird vom Anschlussstutzen her auf das auf den Anschlussstutzen aufgeschobene Schlauchende aufgeschraubt. In einer bevorzugten Ausführungsform weist das Schraubstück dabei ein konisches Innengewinde auf, sodass insbesondere das freie Ende des aufgeschobenen Schlauchstücks gegen den Anschlussstutzen geklemmt wird. Das Aufschrauben des Schraubstücks auf das Schlauchende wird durch eine Führung unterstützt. Hierzu weist der Anschlussstutzen ein Führungsstück auf, das zum Zusammenwirken mit einem entsprechenden Gegenstück des Schraubstücks ausgebildet ist und die zum Aufschrauben des Schraubstücks auf das Schlauchende erforderliche relative axiale Bewegung führt, indem das Gegenstück auf das Führungsstück aufschraubbar ist. Neben der Führung zur Vermeidung von Verkippungen wird auch ein kontrollierter Vortrieb des Schraubstücks zum Aufschrauben auf das Schlauchende realisiert. Dabei sind die Gewindesteigungen von Führungsstück und Gegenstück einerseits und dem auf das Schlauchende aufgeschraubten Innengewinde vorzugsweise gleich groß.

Der Anschlussstutzen weist zweckmäßigerweise eine Oberfläche mit sich in Axialrichtung änderndem Durchmesser auf. Dabei kann der Anschlussstutzen in an sich bekannter Weise aneinander anschließende olivenförmige Ausbuchtungen haben, um das Aufschieben des sich aufweitenden Schlauchendes zu erleichtern. Noch vorteilhafter ist im allgemeinen, wenn in Aufschubrichtung sägezahnförmige Absätze mit allmählich zunehmendem und sich stufenförmig verringerndem Durchmesser vorgesehen sind. Diese Ausbildung der Oberfläche erleichtert das Aufschieben, erschwert jedoch das Abziehen des Schlauchendes. In jedem Fall ist es zweckmäßig, wenn das konische Innengewinde des Schraubstücks mit einem Anschlussstutzen mit mehreren Ausbuchtungen bzw. Absätzen zusammenwirkt, da das Schlauchende dabei durch das Schraubstück in die zwischen den Ausbuchtungen bzw. Absätzen gebildeten Kammern gedrückt wird. Dadurch gelingt eine sichere Abdichtung auch bei der Verwendung von Schläuchen aus einem überwiegend plastischen, fließenden Material, z.B. Weich-PVC.

Das erfindungsgemäß vorgesehene Schraubstück kann manuell auf das Schlauchende aufgeschraubt werden. Dies ist im Einzelfall sinnvoll. Für eine Montage einer Vielzahl von Schlauchverbindungen ist es jedoch vorteilhaft, wenn das Schraubstück an seiner Außenseite mit Angriffsflächen für ein Schraubwerkzeug versehen ist. Erfindungsgemäß kann daher ein Schraubwerkzeug zur Montage der erfindungsgemäßen Schlauchverbindung verwendet werden, das mit einem Gehäuse versehen ist, in dem nebeneinander ein Antriebsrad und ein vom Antriebsrad angetriebenes Schraubstück angeordnet sind, wobei das Antriebsrad eine zentrale Aufnahme für eine Antriebswelle aufweist.

Die Erfindung soll im folgenden anhand von in der Zeichnung dargestellten Ausführungsbeispielen näher erläutert werden. Es zeigen:
- Figur 1 -: einen Schnitt durch eine erfindungsgemäße Schlauchverbindung mit einem anschlussstutzen- seitig aufgeschraubten Schraubstück
- Figur 2 -: eine Draufsicht auf ein Schraubwerkzeug zur Herstellung einer erfindungsgemäßen Schraubverbindung
- Figur 3 -: eine seitliche Ansicht mit Teilschnitt auf das Schraubwerkzeug mit einem Antriebsgerät und einer Schlauchverbindung.

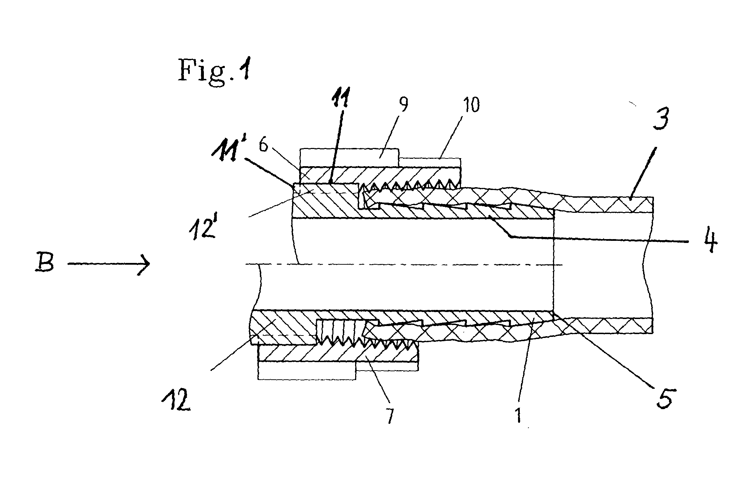

Figur 1 läßt einen Anschlussstutzen 1 erkennen, auf den ein Schlauchende 2 eines Schlauches 3 aufgeschoben wird, wobei sich das Schlauchende durch das Aufschieben auf den Anschlussstutzen 1 aufweitet. Zur Erleichterung des Aufschiebens und zur Erschwerung des (beabsichtigten) Abziehens des Schlauchendes 2 von dem Anschlussstutzen 1 ist dieser von seinem freien Ende 5 ausgehend mit sägezahnförmigen Ringwülsten 4 versehen, durch die der Außendurchmesser des Anschlussstutzens 1 vom freien Ende 5 aus gesehen allmählich zunimmt und stufenweise wieder reduziert wird. In dem dargestellten Ausführungsbeispiel sind vier solcher Ringwulste 4 vorgesehen.

Zur Sicherung des auf den Anschlussstutzen 1 geschobenen Schlauchendes dient ein Schraubstück 6, das mit einem Innengewinde 7 versehen ist.

Das Schraubstück 6 und das Innengewinde 7 sind so dimensioniert, dass das Innengewinde 7 auf das aufgeweitete Schlauchende 2 unmittelbar aufschraubbar ist, indem es sich in das Material des aufgeweiteten Schlauchendes 2 eindrückt und somit sozusagen den Gegengang für den Gewindegang des Innengewindes 7 ausbildet. Das das Schlauchende 2 umgebende Schraubstück 6 presst das Schlauchende durch das Eindrücken des Innengewindes 7 in das Schlauchende 2 gegen den Anschlussstutzen 4 und verhindert naturgemäß ein Aufweiten des Schlauchendes 2 durch einen etwaigen im Schlauch 3 ausgebildeten Innendruck, beispielsweise einer Flüssigkeit.

Durch das radiale Anpressen des Schlauchendes 2 durch das Schraubstück 6 wird ferner die Haftung des Schlauchendes 2 an dem Anschlussstutzen 4 vergrößert, insbesondere die widerhakenähnliche Wirkung der Ringwülste 4 verstärkt.

Das Schraubstück 6 weist an seiner Außenseite axial ausgerichtete Rippen 9 auf, die das Ergreifen des Schraubstücks 6 zum Aufschrauben auf das Schlauchende 2 erleichtern und zugleich Angriffsflächen für ein zum Aufschrauben des Schraubstücks 6 verwendbares, unten näher erläutertes Schraubwerkzeug bilden. In dem dargestellten Ausführungsbeispiel ist neben den Stegen 9 die Anordnung von Angriffsflächen 10 vorgesehen, mit denen das Aufschrauben beispielsweise mit Hilfe eines Maulschlüssels möglich ist.

Das Schraubstück 6 wird von der Seite des Anschlussstutzens 1 her auf das Schlauchende 2 in Richtung des Pfeiles B aufgeschraubt. In dem dargestellten Ausführungsbeispiel ist das Schraubstück 6 mit einem konischen Innengewinde 7 versehen, also mit einem Innengewinde, dessen Durchmesser in Schraubrichtung B zunimmt. Hierdurch wird erreicht, dass das Schlauchende 2 im wesentlichen etwa linienförmig am letzten Ringwulst 4, über den das Schlauchende 2 geschoben ist, geklemmt wird.

An das konische Innengewinde 7 schließt sich an dem dem Schlauchende 2 abgewandten Ende des Schraubstücks 6 ein radial erweitertes Gegenstück 11 für ein gegenüber dem Anschlussstutzen 1 verdicktes Führungsstück 12 an. Das Führungsstück 12 ist einstückig mit dem Anschlussstutzen 1 ausgebildet und weist ein Außengewinde 11' auf, das mit einem entsprechenden Innengewinde 12' des Gegenstücks 11 des Schraubstücks 6 zusammenwirkt, um das Schraubstück 6 beim Aufschrauben des konischen Innengewindes 7 auf das Schlauchende 2 einerseits in axialer Richtung zu führen und so ein Verkippen der Achse des Schraubstücks 6 gegenüber der Achse des Anschlussstutzens 1 zu vermeiden, und andererseits einen kontrollierten Vortrieb beim Aufschrauben des Innengewindes 7 auf das Schlauchstück 2 zu gewährleisten. In der Schnittdarstellung der Figur 1 ist im unteren Teil die Situation am Beginn des Aufschraubens des Schraubstücks 6 und im oberen Teil die Situation des vollständig aufgeschraubten Schraubstücks 6 dargestellt. Es ist erkennbar, daß die Führungsverbindung zwischen dem Außengewinde 11' und dem Innengewinde 12' auch in der vollständig aufgeschraubten Stellung des Schraubstücks 6 erhalten bleibt.

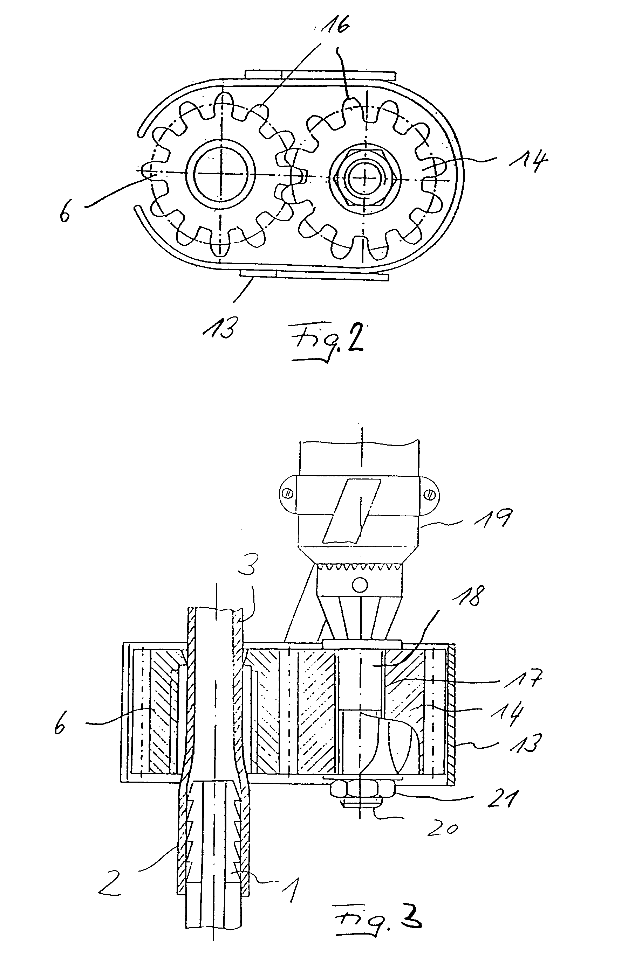

Ein Schraubwerkzeug zur Montage der Schlauchverbindung ist in den Figuren 2 und 3 dargestellt. Erkennbar ist ein Gehäuse 13, in dem sich ein Antriebsrad 14 und als angetriebenes Rad das Schraubstück 6 befinden, deren Außenverzahnungen 16 miteinander kämmen. Das Antriebsrad 14 weist eine zentrale Aufnahme 17 zur drehfesten Aufnahme einer Antriebswelle 18 auf, die durch einen Antriebsdorn einer Bohrmaschine 19 gebildet sein und durch eine auf ein Gewindeende 20 aufgeschraubte Mutter 21 mit dem Antriebsrad 14 verbunden sein kann. Das so in eine Drehbewegung versetzte Antriebsrad 14 dreht das Schraubstück 6, dessen Außenverzahnung durch die Rippen 9, 9' gebildet ist.

## Patentansprüche

1. Schlauchverbindung bestehend aus einem Anschlußstutzen (1) zum Aufschieben eines Schlauches (3) unter Aufweitung des Schlauchinnendurchmessers und einem Schraubstück (6), das ein Innengewinde (7) aufweist, das zumindest abschnittsweise einen Durchmesser aufweist, der kleiner ist als der Außendurchmesser des auf den Anschlussstutzen (4) geschobenen Schlauchendes (2), so daß das Innengewinde (7) unmittelbar unter Ausübung eines radial nach innen gerichteten Drucks auf das Schlauchende (2) aufschraubbar ist, wobei das Schraubstück (6) an seinem dem Schlauchende (2) abgewandten Ende ein mit einem Innengewinde versehenes Gegenstück (11) für ein mit einem entsprechenden Außengewinde versehenes Führungsstück (12) des Anschlußstutzens (1) aufweist, dadurch gekennzeichnet, daß zunächst das Schlauchende (2) auf den Anschlußstutzen (1) aufschiebbar ist und daß anschließend das Schraubstück (6) von der Seite des Anschlußstutzens (1) aus durch die Schraubverbindung zwischen Führungsstück (12) und Gegenstück (11) geführt auf das auf den Anschlußstutzen (1) geschobene Schlauchstück (2) aufschraubbar ist.

2. Schlauchverbindung nach Anspruch 1, dadurch gekennzeichnet, daß das Schraubstück (6") ein konisches Innengewinde (7') aufweist.

3. Schlauchverbindung nach Anspruch 1 oder 2, dadurch gekennzeichnet, daß der Anschlußstutzen (1) eine Oberfläche mit sich in Axialrichtung änderndem Durchmesser aufweist.

4. Schlauchverbindung nach Anspruch 3, dadurch gekennzeichnet, daß die Oberfläche des Anschlußstutzens (1) in Aufschubrichtung sägezahnförmige Absätze (7) mit allmählich zunehmendem und sich stufenförmig verringerndem Durchmesser aufweist.

5. Schlauchverbindung nach einem der Ansprüche 1 bis 4, dadurch gekennzeichnet, daß das Schraubstück (6") an seiner Außenseite mit Angriffsflächen (10) für ein Schraubwerkzeug versehen ist.

6. Verfahren zur Montage einer Schlauchverbindung nach Anspruch 5 unter Verwendung eines Schraubwerkzeuges mit einem Gehäuse (13), in dem nebeneinander ein Antriebsrad (14) und das vom Antriebsrad (14) angetriebene Schraubstück (6") der Schlauchverbindung angeordnet sind, wobei das Antriebsrad (14) eine zentrale Aufnahme (17) für eine Antriebswelle (18) aufweist.

## Claims

1. Hose connection comprising a union (1) for pushing on a hose (3), while enlarging the internal diameter of the hose, and of a screwed piece (6 ), which comprises an internal thread (7 ), at least portions of which are of a diameter which is smaller than the external diameter of the hose end (2) which is pushed onto the union (1), so that the internal thread (7 ) can be screwed directly onto the hose end (2) while exerting a pressure which is directed radially inwards, wherein the screwed piece (6 ) comprises at its end remote from the hose end (2) a counterpiece (11), provided with an internal thread, for a guide piece (12), provided with a corresponding external thread, of the union (1), characterised in that the hose end (2) can firstly be pushed onto the union (1), and that the screwed piece (6 ), being guided from the side of the union (1) through the screwed connection between the guide piece (12) and the counterpiece (11), can then be screwed onto the hose piece (2) pushed onto the union (1).

2. Hose connection according to Claim 1, characterised in that the screwed piece (6 ) comprises a conical internal thread (7).

3. Hose connection according to Claim 1 or 2, characterised in that the union (1) has a surface with a diameter which varies in the axial direction.

4. Hose connection according to Claim 3, characterised in that the surface of the union (1) comprises shoulders (7), which are in the shape of saw teeth in the push-on direction and have a diameter which increases gradually and decreases in steps.

5. Hose connection according to any one of Claims 1 to 4, characterised in that the screwed piece (6 ) is provided on its outside with application faces (10) for a screw tool.

6. Method for assembling a hose connection according to Claim 5 using a screw tool with a housing (13), in which a drive wheel (14) and the screwed piece (6 ), which is driven by the drive wheel (14), of the hose connection are disposed side by side, wherein the drive wheel (14) comprises a central receptacle (17) for a drive shaft (18).

## Revendications

1. Raccord pour tuyau flexible se composant d'un embout de raccordement (1) pour l'emmanchement d'un tuyau flexible (3) moyennant dilatation du diamètre intérieur du tuyau, et d'une pièce filetée (6 ), présentant un filetage intérieur (7 ), qui présente en au moins une zone un diamètre plus petit que le diamètre extérieur de l'extrémité (2) du tuyau flexible emmanchée sur l'embout (₁) de raccordement de sorte que le filetage intérieur (7 ) peut être directement vissé sur l'extrémité (2) du tuyau flexible en exerçant une pression dirigée radialement vers l'intérieur, la pièce filetée (6 ) présentant à son extrémité opposée à l'extrémité (2) du tuyau flexible une contre-pièce (11) munie d'un filetage intérieur, destinée à une pièce de guidage (12) de l'embout de raccordement (1), la pièce de guidage (12) étant munie d'un filetage extérieur correspondant, caractérisé en ce que l'extrémité (2) du tuyau flexible est d'abord emmanchable sur l'embout de raccordement (1) et en ce qu'ensuite la pièce filetée (6 ) peut en partant du côté de l'embout de raccordement (1) et en étant guidée par la liaison vissée entre la pièce de guidage (12) et la contre-pièce (11) être vissée sur la région (2) du tuyau flexible qui est glissée sur l'embout de raccordement (1).

2. Raccord pour tuyau flexible selon la revendication 1, caractérisé en ce que la pièce filetée (6 ) présente un filetage intérieur (7 ) conique.

3. Raccord pour tuyau flexible selon la revendication 1, caractérisé en ce que l'embout de raccordement (1) présente une surface avec un diamètre qui se modifie en direction axiale.

4. Raccord pour tuyau flexible selon la revendication 3, caractérisé en ce que la surface de l'embout de raccordement (1) présente, dans la direction d'emmanchement, des décrochements (7) en dents de scie avec un diamètre augmentant progressivement et se réduisant en forme d'épaulement.

5. Raccord pour tuyau flexible selon l'une des revendications 1 à 4, caractérisé en ce que la pièce filetée (6 ) comporte sur son côté extérieur des surfaces de prise (10) pour un outil de vissage.

6. Procédé de montage d'un raccord pour tuyau flexible selon la revendication 5 en utilisant un outil de vissage comprenant un boîtier (13) dans lequel sont disposés côte à côte une roue d'entraînement (14) et la pièce filetée (6 ) du raccord pour tuyau flexible entraînée par la roue d'entraînement (14), la roue d'entraînement (14) présentant une prise centrale (17) pour un arbre d'entraînement (18).
